# EUROPEAN PATENT APPLICATION

(11) **EP 4 793 487 A1**
(43) Date of publication of application: **19.08.2026**
(21) Application number: 24926255.1
(22) Date of filing: 13.11.2024
(51) Int. Cl.: F03D 1/06, F03D 80/00

(54) **ANTI-VORTEX-INDUCED-VIBRATION DEVICE FOR WIND TURBINE BLADE, AND MOUNTING METHOD THEREFOR**

(71) Applicant: Envision Energy Co., Ltd., Wuxi, Jiangsu 214443 (CN)
(72) Inventor: CHEN, Weiliang, Wuxi, Jiangsu 214443 (CN); ZHANG, Pu, Wuxi, Jiangsu 214443 (CN); PAN, Zhen, Wuxi, Jiangsu 214443 (CN); WANG, Chaolun, Wuxi, Jiangsu 214443 (CN)
(74) Representative: Balder IP Law, S.L.
(86) International application number: PCT/CN2024/131847
(87) International publication number: WO 2026/102618

(57) **Abstract**

Provided are an anti-vortex device for a wind turbine blade and an installation method thereof, relating to the technical field of wind power equipment. In the present disclosure, a plurality of second binding strap assemblies are arranged with intervals sequentially along the extension direction of the wind turbine blade within a target region of the wind turbine blade, where the target region is between the blade tip region and a blade root of the wind turbine blade, and then the plurality of first binding strap assemblies are connected to the plurality of second binding strap assemblies by at least one first connecting member, with one end of each of the at least one first connecting member connected to the blade root of the wind turbine blade. In the above technical scheme, by adding multiple second binding strap assemblies and using the first connecting member to connect the multiple second binding strap assemblies (being equivalent to securing the first connecting member located in the target region to the wind turbine blade via the second binding strap assemblies), the first connecting member is prevented from colliding with the wind turbine blade during operation and producing abnormal noise.

## Description

### TECHNICAL FIELD

The present disclosure relates to the technical field of wind power equipment, and in particular, an anti-vortex device for a wind turbine blade and an installation method thereof.

### BACKGROUND

Wind turbine blades experience periodic vibration phenomena under specific wind speeds due to fluid dynamic effects. Such vibrations typically occur when vortices formed by blades in flowing air shed at frequencies approaching the blades' natural frequencies, inducing resonance that causes high-amplitude vibrations. To suppress such vibrations, anti-vortex devices are generally installed on wind turbine blades. The installation stability of these anti-vortex devices directly impacts their anti-vortex effect and further influences blade operational stability. Therefore, there is an urgent need to design an installation method capable of stably mounting anti-vortex devices.

### SUMMARY

One objective of the present disclosure is to provide an installation method of an anti-vortex device for a wind turbine blade, which addresses the technical problem in related art that unstable installation affects both the anti-vortex effect and the operational stability of the blades.

A further objective of the present disclosure is to enhance the anti-vortex effect.

Another objective of the present disclosure is to provide an anti-vortex device, so as to enhance the anti-vortex effect.

In a first aspect, the present disclosure an installation method of an anti-vortex device for a wind turbine blade. The installation method includes following operations: arranging a plurality of first binding strap assemblies sequentially along an extension direction of the wind turbine blade within a blade tip region of the wind turbine blade; installing a first spoiler block on each of the plurality of first binding strap assemblies; arranging a plurality of second binding strap assemblies with intervals sequentially along the extension direction of the wind turbine blade within a target region of the wind turbine blade, where the target region is between the blade tip region and a blade root of the wind turbine blade; and connecting the plurality of first binding strap assemblies to the plurality of second binding strap assemblies by at least one first connecting member, with one end of each of the at least one first connecting member connected to the blade root of the wind turbine blade.

In some embodiments, in the operation of installing the first spoiler block on each of the plurality of first binding strap assemblies, a plurality of first spoiler blocks are installed on each of the plurality of first binding strap assemblies and are disposed on a leading edge and a trailing edge of the wind turbine blade.

In some embodiments, after the operation of arranging the plurality of first binding strap assemblies sequentially along the extension direction of the wind turbine blade within the blade tip region of the wind turbine blade, the method further includes: connecting two adjacent first binding strap assemblies of the plurality of first binding strap assemblies to each other via at least one connecting strap; and installing at least one second spoiler block on each of the at least one connecting strap.

In some embodiments, in the operation of connecting the two adjacent first binding strap assemblies of the plurality of first binding strap assemblies to each other via the at least one connecting strap, the two adjacent first binding strap assemblies are connected to each other via a plurality of connecting straps, where at least one of the plurality of connecting straps is disposed on a leading edge of the wind turbine blade, and at least one of the plurality of connecting straps is disposed on a trailing edge of the wind turbine blade.

In some embodiments, after the operation of arranging the plurality of second binding strap assemblies with intervals sequentially along the extension direction of the wind turbine blade within the target region of the wind turbine blade, the method further includes: connecting the plurality of second binding strap assemblies by a second connecting member, with one end of the second connecting member connected to a first binding strap assembly at a tail of the blade tip region, and another end of the second connecting member connected to the blade root of the wind turbine blade.

In some embodiments, in the operation of connecting the plurality of first binding strap assemblies to the plurality of second binding strap assemblies by the at least one first connecting member, with the one end of each of the at least one first connecting member connected to the blade root of the wind turbine blade, the one end of each of the at least one first connecting member is connected to a rain shield collar at the blade root, a first wear-resistant member is installed on the rain shield collar, and a section of the first connecting member passing through the first wear-resistant member is encased with a second wear-resistant member.

In some embodiments, each of the plurality of first binding strap assemblies and the plurality of second binding strap assemblies includes a leading edge protection block, a trailing edge protection block, and at least one first binding strap, both the leading edge protection block and the trailing edge protection block being installed on the at least one first binding strap.

In a second aspect, the present disclosure further provides an anti-vortex device for a wind turbine blade, applying the above installation method, and including at least one inclined spoiler block group. Each of the at least one inclined spoiler block group includes a first binding strap assembly and a plurality of first spoiler blocks. The first binding strap assembly includes at least one first binding strap, and a leading edge protection block and a trailing edge protection block that are installed on the at least one first binding strap, where the at least one first binding strap is sleeved on the wind turbine blade, the leading edge protection block is located at the leading edge of the wind turbine blade, and the trailing edge protection block is located at the trailing edge of the wind turbine blade. The plurality of first spoiler blocks are installed on the at least one first binding strap, where the plurality of first spoiler blocks are disposed at the leading edge and the trailing edge of the wind turbine blade and extend beyond the leading edge and trailing edge of the wind turbine blade correspondingly.

In some embodiments, the plurality of first spoiler blocks are inclined toward a blade tip or the blade root of the wind turbine blade.

In some embodiments, an inclined angle between the wind turbine blade and each of the plurality of first spoiler blocks ranges from 10° to 80°.

In the present disclosure, multiple first binding strap assemblies are positioned in the blade tip region of a wind turbine blade, a first spoiler block is then installed on each first binding strap assembly, subsequently, a plurality of second binding strap assemblies are arranged with intervals sequentially along the extension direction of the wind turbine blade within a target region of the wind turbine blade, where the target region is between the blade tip region and a blade root of the wind turbine blade, and finally, the plurality of first binding strap assemblies are connected to the plurality of second binding strap assemblies by at least one first connecting member, with one end of each of the at least one first connecting member connected to the blade root of the wind turbine blade. In the above technical scheme, by adding multiple second binding strap assemblies and using the first connecting member to connect the multiple second binding strap assemblies (being equivalent to securing the first connecting member located in the target region to the wind turbine blade via the second binding strap assemblies), the first connecting member is prevented from colliding with the wind turbine blade during operation and producing abnormal noise. Additionally, by securing the first connecting member using the second binding strap assemblies, since the first connecting member connects multiple first binding strap assemblies, the connection stability of the first binding strap assemblies is improved, thereby enhancing the installation stability of the first spoiler block and ensuring the anti-vortex effect.

Furthermore, in the present disclosure, multiple connecting straps are provided, two adjacent first binding strap assemblies are connected to each other via at least one connecting strap, and at least one second spoiler block is installed on each of the at least one connecting strap.

In the above technical solution, multiple connecting straps are provided so that the installation stability of the first binding strap assembly is improved, and the installation of the second spoiler blocks is facilitated. The second spoiler blocks continuously perturb the aerodynamic profile of the wind turbine blade, disrupting spanwise-continuous energy injection, thereby improving the anti-vortex effect.

Detailed descriptions of specific embodiments with reference to the accompanying drawings will further clarify the aforementioned and other objectives advantages and technical features of the present disclosure for those skilled in the art.

### BRIEF DESCRIPTION OF THE DRAWINGS

Hereinafter, specific embodiments of the present disclosure will be described in detail with reference to the accompanying drawings in an illustrative and non-limiting manner. Same reference numerals in the drawings denote the same or similar components or parts. Those skilled in the art should appreciate that these drawings are not necessarily drawn to scale.
FIG. 1 is a schematic structure view of an anti-vortex device installed on a wind turbine blade according to one embodiment of the present disclosure from one perspective.
FIG. 2 is an enlarged schematic view of a section A in FIG. 1.
FIG. 3 is a schematic structure view of the anti-vortex device installed on the wind turbine blade according to one embodiment of the present disclosure from another perspective.
FIG. 4 is a schematic structure view of a first binding strap assembly according to one embodiment of the present disclosure.
FIG. 5 is a schematic structure view of a first binding strap according to one embodiment of the present disclosure.
FIG. 6 is a schematic structure view of a trailing edge protection block according to one embodiment of the present disclosure.
FIG. 7 is a schematic structure view of a leading edge protection block according to one embodiment of the present disclosure.
FIG. 8 is a schematic structure view of a first spoiler block according to one embodiment of the present disclosure.
FIG. 9 is a schematic flowchart of an installation method of an anti-vortex device for a wind turbine blade according to one embodiment of the present disclosure.
FIG. 10 is a schematic flowchart of an installation method for an anti-vortex device for a wind turbine blade according to another embodiment of the present disclosure;
FIG. 11 is a schematic flowchart of an installation method for an anti-vortex device for a wind turbine blade according to yet another embodiment of the present disclosure.

**In the reference numerals:**

| | | | |
|---|---|---|---|
| 100 | anti-vortex device: | 200 | wind turbine blade |
| 10 | first binding strap assembly | 20 | first spoiler block |
| 30 | second binding strap assembly | 40 | second connecting member |
| 50 | first connecting member | 60 | connecting strap |
| 70 | second spoiler block | 11 | first binding strap |
| 12 | trailing edge protection block | 13 | leading edge protection block |
| 111 | first lacing hole | 121 | first portion |
| 122 | second portion | 123 | second lacing hole |
| 124 | limiting slot | 131 | third lacing hole |
| 21 | spoiler block body | 22 | second binding strap |

### DETAILED DESCRIPTION OF THE EMBODIMENTS

The following describes in detail embodiments of the present disclosure. Examples of these embodiments are shown in the accompanying drawings where same or similar reference numerals denote same or similar elements, or elements possessing same or similar functions. The embodiments described below with reference to the drawings are exemplary, are intended to explain the present disclosure and should not be understood as limiting the present disclosure.

The terms "first" and "second" are used solely for descriptive purposes, and should not be interpreted as indicating or implying relative importance or implicitly specifying the number of indicated technical features. Thus, features defined with "first" or "second" may explicitly or implicitly include at least one such feature, i.e., one or more such features. In the description of the present disclosure, the term "a plurality" means at least two, for example, two, three, and so on, unless otherwise explicitly and specifically defined. When a feature "comprises" or "includes" one or more covered features, it is indicated that other features are not excluded and that other features may be further included, unless otherwise specifically described.

Unless otherwise expressly specified and defined, terms "mounted," "connected," etc. are to be understood in a broad sense. For example, it may be a fixed connection, a removable connection, or a one-piece connection; it may be a mechanical connection, or an electrical connection; it may be a direct connection, or an indirect connection through an intermediate medium; and it may be a connection between two elements or an interaction between the two elements. For those of ordinary skill in the art, specific meanings of the above terms in the embodiments of the present disclosure may be understood according to specific situations.

Unless otherwise limited, all terms used in the description of these embodiments including technical and scientific terms have the same meanings as commonly understood by those of ordinary skill in the technical field to which the present disclosure belongs.

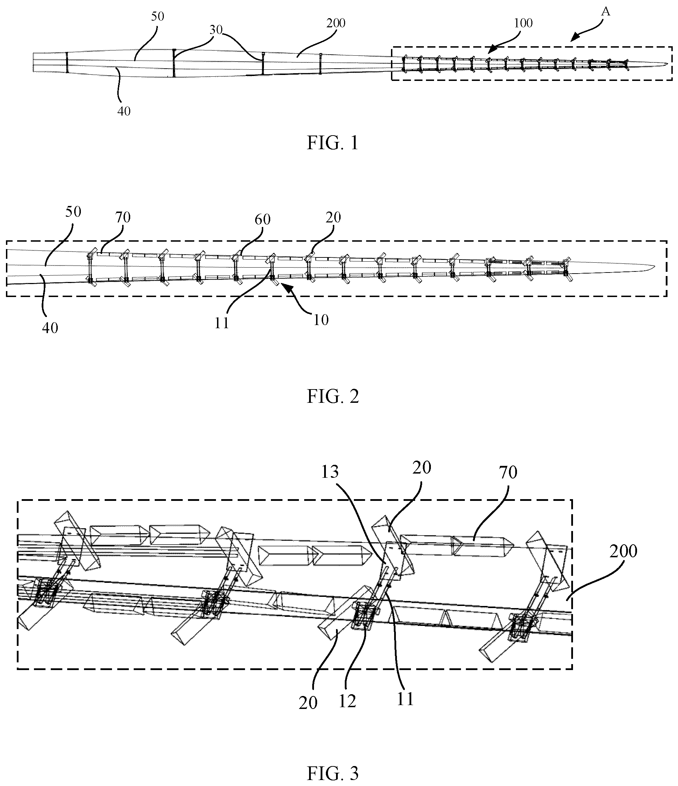

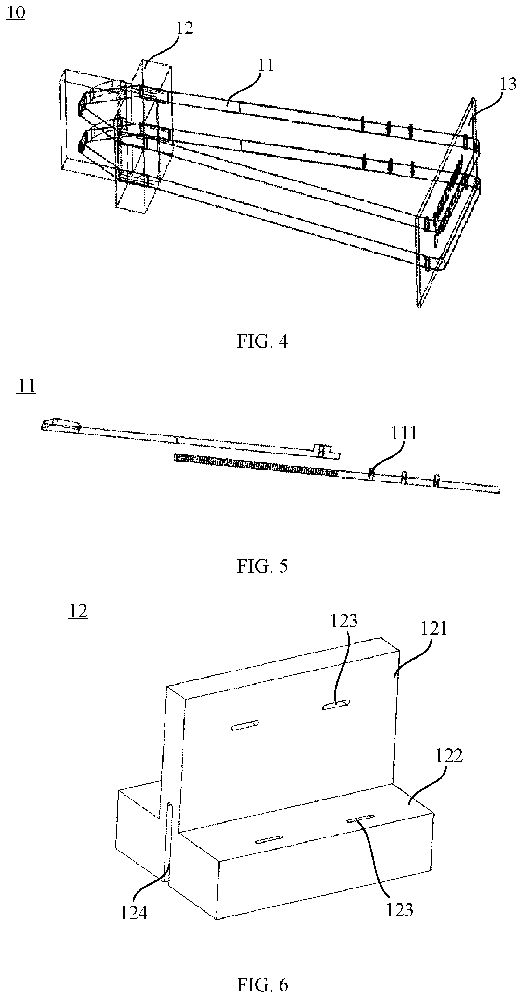

FIG. 1 is a schematic structure view showing an anti-vortex device 100 installed on a wind turbine blade 200 according to one embodiment of the present disclosure from one perspective. FIG. 2 is an enlarged schematic view of a section A in FIG. 1. FIG. 3 is a schematic structure view showing the anti-vortex device 100 installed on the wind turbine blade 200 according to one embodiment of the present disclosure from another perspective. FIG. 4 is a schematic structure view of a first binding strap assembly 10 according to one embodiment of the present disclosure. As shown in FIGS. 1 to 4, in a specific embodiment, the anti-vortex device 100 for the wind turbine blade 200 includes at least one inclined spoiler block group. Each inclined spoiler block group includes a first binding strap assembly 10 and multiple first spoiler blocks 20. The first binding strap assembly 10 includes at least one first binding strap 11, and a leading edge protection block 13 and a trailing edge protection block 12 that are mounted on the at least one first binding strap 11. The at least one first binding strap 11 is sleeved on the wind turbine blade 200. The leading edge protection block 13 is positioned at the leading edge of the wind turbine blade 200. The trailing edge protection block 12 is positioned at the trailing edge of the wind turbine blade 200. Multiple first spoiler blocks 20 are mounted on the first binding strap 11, arranged at the leading edge and trailing edge of the wind turbine blade 200 respectively, and extend beyond the leading edge and trailing edge of the wind turbine blade 200 correspondingly.

In this embodiment, the first spoiler blocks are provided to extend beyond the leading and trailing edges so that airflow disturbance width can be effectively affected, which equivalently changes the chord length of the wind turbine blade 200, thereby changing a vortex shedding frequency of the cross-section of the wind turbine blade 200 and modifying vortex-induced energy input to enhance the anti-vortex effect.

Furthermore, a surface of the first spoiler block 20 above the wind turbine blade 200 further improves the anti-vortex effect.

In some embodiments, multiple inclined spoiler block groups are arranged at intervals across the blade tip region of the wind turbine blade 200.

In some embodiments, first spoiler blocks 20 at the leading edge of the wind turbine blade 200 are positioned on a pressure side of the wind turbine blade 200, while first spoiler blocks 20 at the trailing edge are positioned on a suction side of the wind turbine blade 200. Alternatively, first spoiler blocks 20 at the leading edge of the wind turbine blade 200 are positioned on a suction side of the wind turbine blade 200, while first spoiler blocks 20 at the trailing edge are positioned on a pressure side of the wind turbine blade 200. In these embodiments, the spiral arrangement is adopted to prevent in-phase vortex-induced forces on the wind turbine blade 200, thereby avoiding vibrational excitation.

FIG. 5 is a schematic structure view of a first binding strap according to one embodiment of the present disclosure. As shown in FIG. 5, the first binding strap 11 is elastic and includes hook-and-loop fasteners. These fasteners secure the first binding strap 11 so that the first binding strap 11 is sleeved onto the wind turbine blade 200. Additionally, at least one first lacing hole 111 is disposed on the first binding strap 11. In this embodiment, three first lacing holes 111 are disposed on the first binding strap 11. In another embodiment, the number of first lacing holes 111 may be determined according to specific design requirements.

In some embodiments, the first binding strap assembly 10 includes two first binding straps 11. In other embodiments, the number of first binding straps 11 may be determined based on design needs.

FIG. 6 is a schematic structure view of a trailing edge protection block 12 according to one embodiment of the present disclosure. As shown in FIG. 6, in some embodiments, the trailing edge protection block 12 is T-shaped, and includes a first portion 121 and a second portion 122. The first portion 121 extends along a chordwise direction of the wind turbine blade 200, and the second portion 122 is perpendicular to the first portion 121. At least one second lacing hole 123 is formed on each of the first portion 121 and second portion 122 to accommodate routing of the first binding strap 11. Here, the number of the least one second lacing holes 123 may be determined according to the number of first binding straps 11. More first binding straps 11 require more second lacing holes 123. In a case where there are two first binding straps 11, two second lacing holes 123 are provided on the first portion 121 in a side-by-side manner. The second lacing holes 123 on the second portion 122 are aligned with the second lacing holes 123 on the first portion 121.

In a preferred embodiment, to enhance the installation stability of the trailing edge protection block 12, the second portion 122 includes at least one second lacing hole 123 on each of two sides of the first portion 121. The first binding strap 11 sequentially passes through a second lacing hole 123 on one side of the second portion 122, a second lacing hole 123 on the first portion 121, and a second lacing hole 123 on the other side of the second portion 122, thereby installing the trailing edge protection block 12 to the first binding strap 11.

In some embodiments, the second portion 122 of the trailing edge protection block 12 further includes a limiting slot 124 configured to engage with the trailing edge of the wind turbine blade 200 to achieve limiting of the trailing edge protection block 12, thereby preventing displacement of the trailing edge protection block 12.

In some embodiments, both the leading edge protection block 13 and the trailing edge protection block 12 adopt foam material.

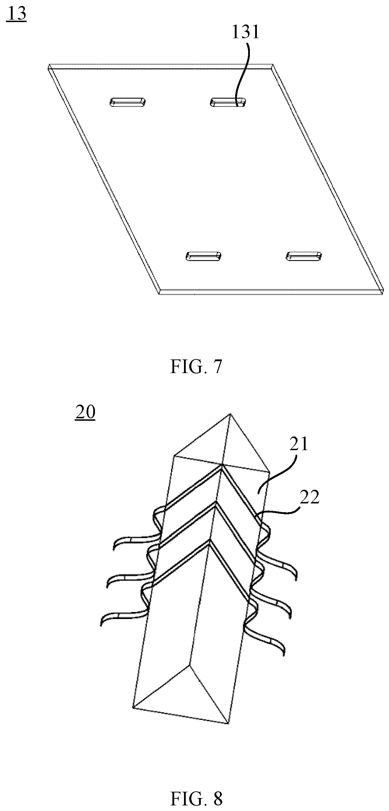

FIG. 7 is a schematic structure view of a leading edge protection block 13 according to one embodiment of the present disclosure. As shown in FIG. 7, the leading edge protection block 13 is plate-shaped. At least one third lacing hole 131 is formed on the leading edge protection block 13 to accommodate routing of the first binding strap 11. In some embodiments, the number of third lacing holes 131 is the same as the number of second lacing holes 123 on the second portion 122 of the trailing edge protection block 12.

FIG. 8 is a schematic structure view of a first spoiler block 20 according to one embodiment of the present disclosure. As shown in FIG. 8, in some embodiments, the first spoiler block 20 is of a triangular prism structure, a rectangular prism structure, or a cylindrical structure. The first spoiler block 20 includes a spoiler block body 21 and at least one second binding strap 22 connected to the spoiler block body 21. The second binding strap 22 includes a hook-and-loop fastener to mount the entire first spoiler block 20 onto the first binding strap 11 of the first binding strap assembly 10. In this embodiment, the first spoiler block 20 has three second binding straps 22 spaced apart along an extension direction of the spoiler block body 21. In other embodiments, the number of the second binding straps 22 may be set based on an extension length of the spoiler block body 21. The longer the spoiler block body 21, the larger the number of the second binding straps 22, thereby enhancing the connection stability.

In some embodiments, all first spoiler blocks 20 are inclined toward either the blade tip or the blade root of the wind turbine blade 200. In other embodiments, the first spoiler block 20 may be installed perpendicular to the wind turbine blade 200 according to design requirements.

Inclination of the first spoiler blocks 20 facilitates removal, reducing disassembly time for the anti-vortex device 100.

In some embodiments, an inclined angle between the first spoiler block 20 and the wind turbine blade 200 ranges from 10° to 80°. For example, the inclined angle may be 10°, 20°, 30°, 40°, 50°, 60°, 70°, or 80°.

In some embodiments, the anti-vortex device 100 further includes at least one first connecting member 50 configured to interlink first binding strap assemblies 10 of all inclined spoiler block groups, where one end of the first connecting member 50 is connected to the blade root of the wind turbine blade 200, thereby securing all the inclined spoiler block groups.

In some embodiments, the first connecting member 50 is a rope. The rope may be routed through the first lacing holes 111 on the first binding strap 11 of the first binding strap assembly 10, thereby serially connecting multiple first binding strap assemblies 10.

Referring to FIG. 1, in some embodiments, the anti-vortex device 100 further includes multiple second binding strap assemblies 30 spaced along an extension direction of the wind turbine blade 200 in a target region of the wind turbine blade 200, where the target region is between the blade tip region and the blade root of the wind turbine blade 200. The first connecting member 50 is further configured to connect the multiple second binding strap assemblies 30, thereby collectively securing both the multiple first binding strap assemblies 10 and the multiple second binding strap assemblies 30 to the blade root of the wind turbine blade 200.

This embodiment additionally deploys multiple second binding strap assemblies 30 between the blade tip region and the blade root. The number of the second binding strap assemblies 30 may be determined based on the length of the wind turbine blade 200, which effectively restrains excessive mid-span deflection of the first connecting member 50 during operation.

In some embodiments, the structure of the second binding strap assembly 30 is identical to the structure of the first binding strap assembly 10. That is to say, both the first binding strap assembly 10 and the second binding strap assembly 30 include a leading edge protection block 13, a trailing edge protection block 12, and at least one first binding strap 11. Both the leading edge protection block 13 and trailing edge protection block 12 are mounted on the first binding strap 11. The first connecting member 50 first serially connects the multiple first binding strap assemblies 10, and is then routed through the first lacing holes 111 on the first binding straps 11 of the second binding strap assembly 30, thereby serially connecting the first binding strap assemblies 10 and second binding strap assemblies 30. Here, a leading end of the first connecting member 50 is connected to the first binding strap 11 of the first one of the first binding strap assemblies 10 in the blade tip region, and a trailing end of the first connecting member 50 is connected to the blade root of the wind turbine blade 200, thereby securing the first binding strap assemblies 10 and the second binding strap assemblies 30.

In some embodiments, one end of the first connecting member 50 is connected to a rain shield collar at the blade root. A first abrasion-resistant element is installed on the rain shield collar. A section of the first connecting member 50 passing through the first wear-resistant member is encased with a second wear-resistant member. Here, the first abrasion-resistant element may be a grommet, and the second abrasion-resistant element may be an abrasion-resistant tape. Wrapping this abrasion-resistant tape around the first connecting member 50 at the rain shield collar provides protective functionality, preventing abrasion-induced breakage of the first connecting member 50 which would cause complete failure of the anti-vortex device 100.

In some embodiments, the anti-vortex device 100 further includes multiple connecting straps 60, configured to connect two adjacent first binding strap assemblies 10, thereby enhancing the installation stability.

In some embodiments the anti-vortex device 100 further includes multiple second spoiler blocks 70. At least one second spoiler block 70 is installed on each connecting strap 60.

In an embodiment, the second spoiler blocks 70 are arranged along the extension direction of the wind turbine blade 200. In other embodiments, the installation orientation of the second spoiler blocks 70 may be determined according to specific design requirements.

In this embodiment, multiple connecting straps 60 are provided so that the installation stability of the first binding strap assemblies 10 is improved and the installation of second spoiler blocks 70 is facilitated. The second spoiler blocks 70 continuously perturb the aerodynamic profile of the wind turbine blade 200, disrupting spanwise-continuous energy injection, thereby improving the anti-vortex effect.

In an embodiment, two adjacent first binding strap assemblies 10 are connected by at least two connecting straps 60. At least one connecting strap 60 is positioned at the leading edge of the wind turbine blade 200, and at least one connecting strap 60 is positioned at the trailing edge of the wind turbine blade 200. At least one second spoiler block 70 is installed on each connecting strap 60. The second spoiler block 70 arranged at the leading edge of the wind turbine blade 200 is located on the pressure side of the wind turbine blade 200, and the second spoiler block 70 arranged at the trailing edge of the wind turbine blade 200 is located on the suction side of the wind turbine blade 200.

In some embodiments, the connecting strap 60 may be an elastic binding strap, arranged along the extension direction of the wind turbine blade 200. In some embodiments, between two adjacent first binding strap assemblies 10, an equal number of second spoiler blocks 70 are arranged on each of the leading edge and the trailing edge of the wind turbine blade 200. For example, if two second spoiler blocks 70 are arranged on the leading edge of the wind turbine blade 200, two second spoiler blocks 70 are also arranged on the trailing edge of the wind turbine blade 200. The structure of the second spoiler block 70 is identical to the structure of the first spoiler block 20, differing only in orientation. The first spoiler block 20 is inclined, while the second spoiler block 70 is arranged along the extending direction of the blade 200. In other embodiments, the orientations of the second spoiler block 70 and first spoiler block 20 may be configured identically according to specific design requirements.

In an embodiment, second spoiler blocks 70 arranged in-phase on the leading edge of the wind turbine blade 200 are positioned on the pressure side of the wind turbine blade 200, and second spoiler blocks 70 arranged on the trailing edge of the wind turbine blade 200 are positioned on the suction side of the wind turbine blade 200. Alternatively, second spoiler blocks 70 arranged in-phase on the leading edge of the wind turbine blade 200 are positioned on the suction side of the wind turbine blade 200, and second spoiler blocks 70 arranged on the trailing edge of the wind turbine blade 200 are positioned on the pressure side of the wind turbine blade 200. This embodiment uses helical arrangements for both the first spoiler blocks 20 and the second spoiler blocks 70, preventing in-phase vortex-induced forces on the wind turbine blade 200, thereby avoiding vibrational excitation.

In this embodiment, both the first spoiler blocks 20 and the second spoiler blocks 70 are installed on the wind turbine blade 200 so that the chord length of the wind turbine blade 200 is altered, thereby changing the vortex shedding frequency of the cross-section of the wind turbine blade 200 and modifying vortex-induced energy input to enhance the anti-vortex effect.

In some embodiments, the anti-vortex device 100 further includes a second connecting member 40 configured to interlink all second binding strap assemblies 30. One end of the second connecting member 40 is connected to a first binding strap assembly 10 at the tail end of the blade tip region, and the other end of the second connecting member 40 is connected to the blade root of the wind turbine blade 200. Specifically, the second connecting member 40 is connected to the last first binding strap assembly 10 in the blade tip region (i.e., the termination position of the first binding strap assemblies 10 in the blade tip region), playing a role of anti-detachment.

In some embodiments, the second connecting member 40 is also a rope, playing a role of fixation. One end of the second connecting member 40 is connected to the rain shield collar at the blade root. The first abrasion-resistant element is installed on the rain shield collar. A section of the second connecting member 40 passing through the first wear-resistant member is encased with a second wear-resistant member.

The first connecting member 50 acts as a primary rope, while the second 40 acts as a fixed rope. The second connecting member 40 is connected to the last first binding strap assembly 10 in the blade tip region (i.e., the termination position of the first binding strap assemblies 10 in the blade tip region), playing a role of anti-detachment. The primary rope threads through all binding strap assemblies, enabling full removal of the anti-vortex device 100.

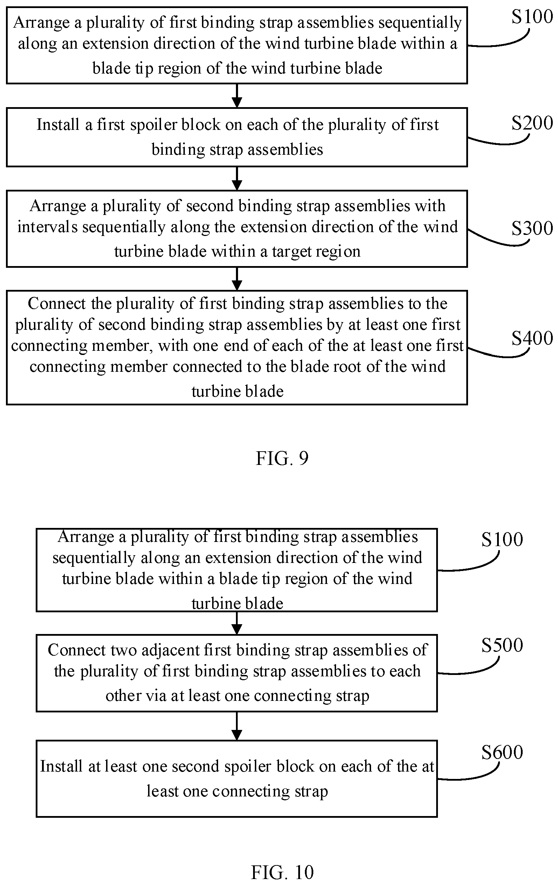

FIG. 9 is a schematic flow chart of an installation method for an anti-vortex device for a wind turbine blade 100 according to an embodiment of the present disclosure. As shown in FIG. 9, in a specific embodiment, the installation method of the anti-vortex device for the wind turbine blade 100 includes operations described below.

In operation S100, a plurality of first binding strap assemblies 10 are arranged sequentially along an extension direction of the wind turbine blade 200 within a blade tip region of the wind turbine blade 200.

In operation S200, a first spoiler block 20 is installed on each of the plurality of first binding strap assemblies 10.

In operation S300, a plurality of second binding strap assemblies 30 are arranged with intervals sequentially along the extension direction of the wind turbine blade 200 within a target region of the wind turbine blade 200, where the target region is between the blade tip region and a blade root of the wind turbine blade 200.

In operation S400, the plurality of first binding strap assemblies 10 are connected to the plurality of second binding strap assemblies 30 by at least one first connecting member 50, where one end of each of the at least one first connecting member 50 is connected to the blade root of the wind turbine blade 200.

In this embodiment, by adding the plurality of second binding strap assemblies 30 and connecting the plurality of second binding strap assemblies 30 by using the first connecting member 50 (which is equivalent to fixing the first connecting member 50 located in the target region to the wind turbine blade 200 via the second binding strap assemblies 30), it can be avoided that during operation of the wind turbine blade 200, the first connecting member 50 in the target region impacts the wind turbine blade 200 to generate abnormal noise; and by fixing the first connecting member 50 via the second binding strap assemblies 30, since the first connecting member 50 connects the plurality of first binding strap assemblies 10, the connection stability of the first binding strap assemblies 10 can be improved, so that the installation stability of the first spoiler blocks 20 can be improved, ensuring the anti-vortex effect.

In operation S100, after providing the plurality of first binding strap assemblies 10, the plurality of first binding strap assemblies 10 are numbered, and then arranged sequentially in the blade tip region of the wind turbine blade 200 according to numbers of the plurality of first binding strap assemblies 10. Here, since a chord length in the blade tip region is variable and the first binding strap assembly 10 is wrapped around the blade, a length of the corresponding first binding strap assembly 10 can be set according to the chord length of the blade tip region; then the first binding strap assemblies 10 of different lengths are numbered, and arranged sequentially at corresponding positions in the blade tip region according to the numbers, so that the first binding strap assemblies 10 with appropriate lengths can be installed at different positions in the blade tip region, improving the installation stability of the first binding strap assemblies 10.

In some embodiments, the first binding strap assembly 10 includes a leading edge protection block 13, a trailing edge protection block 12, and at least one first binding strap 11. The leading edge protection block 13 and the trailing edge protection block 12 are both installed on the first binding strap 11. The leading edge protection block 13 is installed at the leading edge of the wind turbine blade 200, and the trailing edge protection block 12 is installed at the trailing edge of the wind turbine blade 200.

In operation S200, multiple first spoiler blocks 20 are installed on each first binding strap assembly 10, and are respectively arranged at the leading edge and trailing edge of the wind turbine blade 200. Each first spoiler block 20 is mounted onto the first binding strap 11 of the first binding strap assembly 10 via its own binding strap. At both the leading edge and trailing edge of the wind turbine blade 200, first spoiler blocks 20 are installed and extend beyond the leading edge and trailing edge of the wind turbine blade 200 correspondingly. In an embodiment, the first spoiler blocks 20 are inclined at the leading edge and trailing edge of the wind turbine blade 200. That is, an angle between each first spoiler block 20 and the wind turbine blade 200 is acute. In other embodiments, the first spoiler blocks 20 may be installed perpendicular or parallel to the wind turbine blade 200, as determined by design requirements.

In a preferred embodiment, multiple first spoiler blocks 20 are uniformly distributed at the leading edge and trailing edge of the wind turbine blade 200.

In some embodiments, two first spoiler blocks 20 are installed on each first binding strap assembly 10, where one first spoiler block 20 is inclined and extends beyond the leading edge of the wind turbine blade 200, and another first spoiler block 20 is inclined and extends beyond the trailing edge of the wind turbine blade 200. In an embodiment, these spoiler blocks at the leading edge and trailing edge of the wind turbine blade 200 are symmetrically arranged about the longitudinal axis of the wind turbine blade 200.

In some embodiments, an inclined angle between the first spoiler block 20 and the wind turbine blade 200 ranges from 10° to 80°. For example, the inclined angle may be 10°, 20°, 30°, 40°, 50°, 60°, 70°, or 80°. The first spoiler blocks 20 at the leading edge and trailing edge exhibit the same inclination direction, that is, being inclined toward either the blade tip or the blade root of the wind turbine blade 200.

In operation S300, during installation of the second binding strap assemblies 30, lengths of corresponding second binding strap assemblies 30 may be set based on chord lengths in the target region. The second binding strap assemblies 30 of different lengths are then numbered and sequentially positioned at corresponding locations in the target region according to the numbers, so that the second binding strap assemblies 30 with appropriate lengths can be installed at different positions in the target region, improving the installation stability of the second binding strap assemblies 30.

The first binding strap assembly 10 requires installation of the first spoiler blocks 20, whereas the second binding strap assembly 30 serves to secure the first connecting member 50 without installation of spoiler blocks.

This embodiment adds multiple second binding strap assemblies 30 between the blade tip region and the blade root. The number of the second binding strap assemblies 30 may be determined by the length of the wind turbine blade 200, which effectively restrains excessive mid-span deflection of the first connecting member 50 during operation.

In operation S400, the first connecting member 50 is a rope. The rope may be routed through the first lacing holes 111 on the first binding strap 11 of the first binding strap assembly 10, thereby serially connecting multiple first binding strap assemblies 10. Then, the rope is routed through the first lacing holes 111 on the first binding straps 11 of the second binding strap assembly 30, thereby serially connecting the first binding strap assemblies 10 and second binding strap assemblies 30. Here, a leading end of the first connecting member 50 is connected to the first binding strap 11 of the first one of the first binding strap assemblies 10 in the blade tip region, and a trailing end of the first connecting member 50 is connected to the blade root of the wind turbine blade 200, thereby securing the first binding strap assemblies 10 and the second binding strap assemblies 30.

In operation S400, one end of the first connecting member 50 is connected to a rain shield collar at the blade root. A first abrasion-resistant element is installed on the rain shield collar. A section of the first connecting member 50 passing through the first wear-resistant member is encased with a second wear-resistant member. Here, the first abrasion-resistant element may be a grommet, and the second abrasion-resistant element may be an abrasion-resistant tape. Wrapping this abrasion-resistant tape around the first connecting member 50 at the rain shield collar provides protective functionality, preventing abrasion-induced breakage of the first connecting member 50 which would cause complete failure of the anti-vortex device 100.

In an embodiment, on the same first binding strap assembly 10, the first spoiler block 20 arranged at the leading edge of the wind turbine blade 200 is positioned on the pressure side of the wind turbine blade 200, while the first spoiler block 20 arranged at the trailing edge of the wind turbine blade 200 is positioned on the suction side of the wind turbine blade 200. Alternatively, the first spoiler block 20 arranged at the leading edge of the wind turbine blade 200 is positioned on the suction side of the wind turbine blade 200, while the first spoiler block 20 arranged at the trailing edge of the wind turbine blade 200 is positioned on the pressure side of the wind turbine blade 200. This embodiment employs a spiral arrangement to prevent in-phase vortex-induced forces on the wind turbine blade 200, thereby avoiding vibrational excitation. Here, the first spoiler blocks 20 on the same first binding strap assembly 10 exhibit phase synchronization.

FIG. 10 is a schematic flowchart of an installation method for the anti-vortex device for a wind turbine blade 100 according to another embodiment of the present disclosure. As shown in FIG. 10, after operation S100, the method further includes the following operations.

In operation S500, two adjacent first binding strap assemblies 10 are connected to each other via at least one connecting strap 60.

In operation S600, at least one second spoiler block 70 is installed on each connecting strap 60. It should be noted that there is no sequential dependency between operation S500 and operation S200. That is, the connecting straps 60 may be installed first, or the first spoiler blocks 20 may be installed first.

In this embodiment, multiple connecting straps 60 are provided so that the installation stability of the first binding strap assemblies 10 is improved and the installation of second spoiler blocks 70 is facilitated. The second spoiler blocks 70 continuously perturb the aerodynamic profile of the wind turbine blade 200, disrupting spanwise-continuous energy injection, thereby improving the anti-vortex effect.

In an embodiment, the second spoiler blocks 70 are arranged on the extension direction of the wind turbine blade 200.

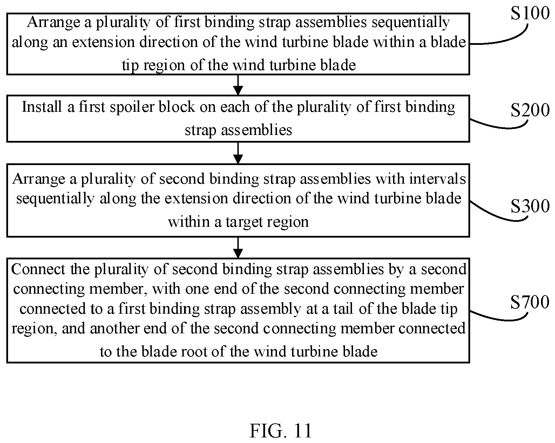

FIG. 11 is a schematic flowchart of an installation method for an anti-vortex device 100 for a wind turbine blade 200 according to yet another embodiment of the present disclosure. As shown in FIG. 11, after the operation S300, the installation method further includes the following operations.

In operation S700, the plurality of second binding strap assemblies are connected to each other by a second connecting member 40, with one end of the second connecting member 40 connected to a first binding strap assembly 10 at a tail of the blade tip region, and another end of the second connecting member 40 connected to the blade root of the wind turbine blade 200. It should be noted that there is no sequential dependency between operation S700 and operation S400. That is, the first connecting member 50 may be installed first, or the second connecting member 40 may be installed first.

In this embodiment, after hoisting of the wind turbine blade 200, the above installation method ensures the long-term reliability of the anti-vortex device 100 fixed on the wind turbine blade 200. This guarantees the integrity of the anti-vortex device 100 under extreme outdoor harsh conditions, preventing the anti-vortex device 100 from being blown off or carried away. The aforementioned installation method can be applied in multiple scenarios, such as storage, transportation, hoisting, and operations prior to grid connection of the wind turbine blade 200.

When disassembling the anti-vortex device 100, the wind turbine blade 200 to be disassembled requires to be rotated to a designated disassembling position, and serrations of the serrated trailing edge blades need to be adjusted to a specified disassembling pitch angle. One person needs to sequentially loosen the first connecting member 50 and the second connecting member 40 from the rain shield collar to release the first connecting member 50 and the second connecting member 40. The first connecting member 50 will fall to the ground. Ground personnel needs to position themselves according to the specified disassembly angle, and pull the first connecting member 50 from the ground. Under the applied external force, the hook and loop fastener is disengaged, causing the first binding strap assembly 10 and the second binding strap assembly 30 to detach from the wind turbine blade 200. As a result, the entire anti-vortex device 100 can be disassembled by applying force solely to the first connecting member 50, making the disassembly process relatively convenient.

To this point, those skilled in the art should appreciate that although a plurality of exemplary embodiments of the present disclosure have been exhaustively shown and described herein, many other variations or modifications consistent with the principles of the present disclosure can still be directly identified or derived from the present disclosure without departing from the spirit and scope of the present disclosure. Accordingly, the scope of the present disclosure should be understood and recognized as covering all such other variants or modifications.

## Claims

1. An installation method of an anti-vortex device for a wind turbine blade, comprising following operations:
arranging a plurality of first binding strap assemblies sequentially along an extension direction of the wind turbine blade within a blade tip region of the wind turbine blade;
installing a first spoiler block on each of the plurality of first binding strap assemblies;
arranging a plurality of second binding strap assemblies with intervals sequentially along the extension direction of the wind turbine blade within a target region of the wind turbine blade, wherein the target region is between the blade tip region and a blade root of the wind turbine blade; and
connecting the plurality of first binding strap assemblies to the plurality of second binding strap assemblies by at least one first connecting member, with one end of each of the at least one first connecting member connected to the blade root of the wind turbine blade.

2. The installation method according to claim 1, wherein in the operation of installing the first spoiler block on each of the plurality of first binding strap assemblies, a plurality of first spoiler blocks are installed on each of the plurality of first binding strap assemblies and are disposed on a leading edge and a trailing edge of the wind turbine blade.

3. The installation method according to claim 1, wherein after the operation of arranging the plurality of first binding strap assemblies sequentially along the extension direction of the wind turbine blade within the blade tip region of the wind turbine blade, the method further comprises:
connecting two adjacent first binding strap assemblies of the plurality of first binding strap assemblies to each other via at least one connecting strap; and
installing at least one second spoiler block on each of the at least one connecting strap.

4. The installation method according to claim 3, wherein in the operation of connecting the two adjacent first binding strap assemblies of the plurality of first binding strap assemblies to each other via the at least one connecting strap, the two adjacent first binding strap assemblies are connected to each other via a plurality of connecting straps, wherein at least one of the plurality of connecting straps is disposed on a leading edge of the wind turbine blade, and at least one of the plurality of connecting straps is disposed on a trailing edge of the wind turbine blade.

5. The installation method according to claim 1, wherein after the operation of arranging the plurality of second binding strap assemblies with intervals sequentially along the extension direction of the wind turbine blade within the target region of the wind turbine blade, the method further comprises:
connecting the plurality of second binding strap assemblies by a second connecting member, with one end of the second connecting member connected to a first binding strap assembly at a tail of the blade tip region, and another end of the second connecting member connected to the blade root of the wind turbine blade.

6. The installation method according to claim 1, wherein in the operation of connecting the plurality of first binding strap assemblies to the plurality of second binding strap assemblies by the at least one first connecting member, with the one end of each of the at least one first connecting member connected to the blade root of the wind turbine blade, the one end of each of the at least one first connecting member is connected to a rain shield collar at the blade root, a first wear-resistant member is installed on the rain shield collar, and a section of the first connecting member passing through the first wear-resistant member is encased with a second wear-resistant member.

7. The installation method according to claim 5, wherein each of the plurality of first binding strap assemblies and the plurality of second binding strap assemblies includes a leading edge protection block, a trailing edge protection block, and at least one first binding strap, both the leading edge protection block and the trailing edge protection block being installed on the at least one first binding strap.

8. An anti-vortex device for a wind turbine blade, applying the installation method according to any one of claims 1 to 7, and comprising at least one inclined spoiler block group, each of the at least one inclined spoiler block group including:
a first binding strap assembly of the plurality of first binding strap assemblies, including at least one first binding strap, and a leading edge protection block and a trailing edge protection block that are installed on the at least one first binding strap, wherein the at least one first binding strap is sleeved on the wind turbine blade, the leading edge protection block is located at the leading edge of the wind turbine blade, and the trailing edge protection block is located at the trailing edge of the wind turbine blade; and
a plurality of first spoiler blocks, installed on the at least one first binding strap, wherein the plurality of first spoiler blocks are disposed at the leading edge and the trailing edge of the wind turbine blade and extend beyond the leading edge and trailing edge of the wind turbine blade correspondingly.

9. The anti-vortex device according to claim 8, wherein the plurality of first spoiler blocks are inclined toward a blade tip or the blade root of the wind turbine blade.

10. The anti-vortex device according to claim 8, wherein an inclined angle between the wind turbine blade and each of the plurality of first spoiler blocks ranges from 10° to 80°.
